# EUROPEAN PATENT APPLICATION

(11) **EP 3 951 835 A1**
(43) Date of publication of application: **09.02.2022**
(21) Application number: 20784281.6
(22) Date of filing: 23.01.2020
(51) Int. Cl.: H01J 49/04, H01J 49/10, H01J 49/26, G01N 27/62

(54) **IONIZATION METHOD AND MASS SPECTROMETRY METHOD**

(30) Priority: 29.03.2019 JP 2019066619
(71) Applicant: Hamamatsu Photonics K.K., Hamamatsu-shi, Shizuoka 435-8558 (JP)
(72) Inventor: KOTANI Masahiro, Hamamatsu-shi, Shizuoka 435-8558 (JP); OHMURA Takayuki, Hamamatsu-shi, Shizuoka 435-8558 (JP); SAIGUSA Daisuke, Sendai-shi, Miyagi 980-8577 (JP)
(74) Representative: Grünecker Patent- und Rechtsanwälte PartG mbB
(86) International application number: PCT/JP2020/002378
(87) International publication number: WO 2020/202728

(57) **Abstract**

An ionization method includes: a first process of preparing a sample support body including an electrically insulating substrate having a first surface, a second surface on a side opposite to the first surface, and a plurality of through-holes opening on each of the first surface and the second surface and an electrically insulating frame attached to the substrate; a second process of mounting a sample on a mount surface of a mount portion and mounting the sample support body on the mount surface so that the second surface is in contact with the sample; and a third process of ionizing components of the sample that have moved to the first surface side via the plurality of through-holes by irradiating the first surface with charged-droplets and sucking the ionized components.

## Description

### Technical Field

The present disclosure relates to an ionization method and a mass spectrometry method.

### Background Art

As a method of ionizing a sample such as a biological sample for performing mass spectrometry or the like, a desorption electrospray ionization method (DESI) is known (refer to, for example, Patent Literature 1). The desorption electrospray ionization method is a method of desorbing and ionizing a sample by irradiating the sample with charged-droplets.

### Citation List

### Patent Literature

Patent Literature 1: Japanese Unexamined Patent Publication No. 2007-165116

### Summary of Invention

### Technical Problem

In the desorption electrospray ionization method, for example, in order to improve a signal intensity (sensitivity) in the mass spectrometry, it is required to surely ionize components of the sample.

An object of the present disclosure is to provide an ionization method capable of surely ionizing components of a sample by irradiation with charged-droplets, and a mass spectrometry method capable of improving a signal intensity.

### Solution to Problem

An ionization method of one aspect of the present disclosure includes: a first process of preparing a sample support body including an electrically insulating substrate having a first surface, a second surface on a side opposite to the first surface, and a plurality of through-holes opening on each of the first surface and the second surface, and an electrically insulating frame attached to the substrate; a second process of mounting a sample on a mount surface of a mount portion and mounting the sample support body on the mount surface so that the second surface is in contact with the sample; and a third process of ionizing components of the sample that have moved to the first surface side via the plurality of through-holes by irradiating the first surface with charged-droplets and sucking the ionized components.

In the ionization method, in the substrate of the sample support body, the components of the sample move from the second surface side to the first surface side via the plurality of through-holes and stay on the first surface side. Then, since the substrate and frame of the sample support body are electrically insulating members, for example, even if a microdroplet irradiation portion to which a high voltage is applied is allowed to be close to the first surface, the occurrence of electric discharge between the microdroplet irradiation portion and the sample support body is suppressed. Therefore, according to this ionization method, the microdroplet irradiation portion is allowed to be close to the first surface and the first surface is irradiated with the charged-droplets, so that it is possible to surely ionize the components of the sample that have moved to the first surface side via the plurality of through-holes.

In the ionization method of one aspect of the present disclosure, the third process may be performed under conditions of from an atmospheric pressure ambience to a medium vacuum ambience (ambience having a vacuum degree of 10⁻³ Torr or more). Accordingly, it is possible to easily replace the sample and easily observe and analyze the sample.

In the ionization method of one aspect of the present disclosure, in the third process, an irradiation region of the charged-droplets may be moved relative to the first surface. In the components of the sample staying on the first surface side of the substrate, the position information (two-dimensional distribution information of the molecules constituting the sample) of the sample is maintained. Therefore, the irradiation region of the charged-droplets is moved relative to the first surface, so that it is possible to ionize the components of the sample while maintaining the position information of the sample. Accordingly, the two-dimensional distribution of the molecules constituting the sample can be imaged in the subsequent process of detecting the ionized component. Further, as described above, since the microdroplet irradiation portion can be allowed to be close to the first surface, it is possible to suppress the expansion of the irradiation region of the charged-droplets. Accordingly, in the subsequent process of detecting the ionized components, it is possible to form an image from the two-dimensional distribution of the molecules constituting the sample with a high resolution.

A mass spectrometry method of one aspect of the present disclosure includes the first process, the second process, and the third process of the above-described ionization method and a fourth process of detecting the components ionized in the third process.

In this mass spectrometry method, as described above, since the components of the sample are surely ionized by the irradiation with the charged-droplets, it is possible to improve the signal intensity at the time of detecting the ionized components.

### Advantageous Effects of Invention

According to the present disclosure, it is possible to provide an ionization method capable of surely ionizing components of a sample by irradiation with charged-droplets and a mass spectrometry method capable of improving a signal intensity.

### Brief Description of Drawings

FIG. 1 is a plan view of a sample support body used in a mass spectrometry method of one embodiment.
FIG. 2 is a cross-sectional view of the sample support body taken along line II-II illustrated in FIG. 1.
FIG. 3 is a magnified image of a substrate of the sample support body illustrated in FIG. 1.
FIG. 4 is a diagram illustrating a process of a mass spectrometry method of one embodiment.
FIG. 5 is a view illustrating a process of the mass spectrometry method of one embodiment.
FIG. 6 is a configuration diagram of a mass spectrometer in which the mass spectrometry method of one embodiment is performed.
FIG. 7 is a view illustrating a mass spectrum obtained by a mass spectrometry method of Comparative Example.
FIG. 8 is a view illustrating a mass spectrum obtained by a mass spectrometry method of Example.
FIG. 9 is a view illustrating a two-dimensional distribution image of specific ions obtained by the mass spectrometry method of Comparative Example.
FIG. 10 is a view illustrating a two-dimensional distribution image of specific ions obtained by the mass spectrometry method of Example.

### Description of Embodiments

Hereinafter, embodiments of the present disclosure will be described in detail with reference to the drawings. It is noted that the same or equivalent portions are denoted by the same reference signs in each of the drawings, and duplicate descriptions thereof will be omitted.

### [Sample Support Body]

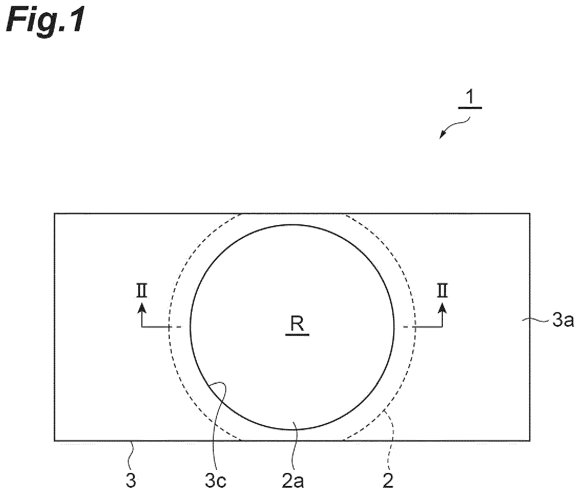

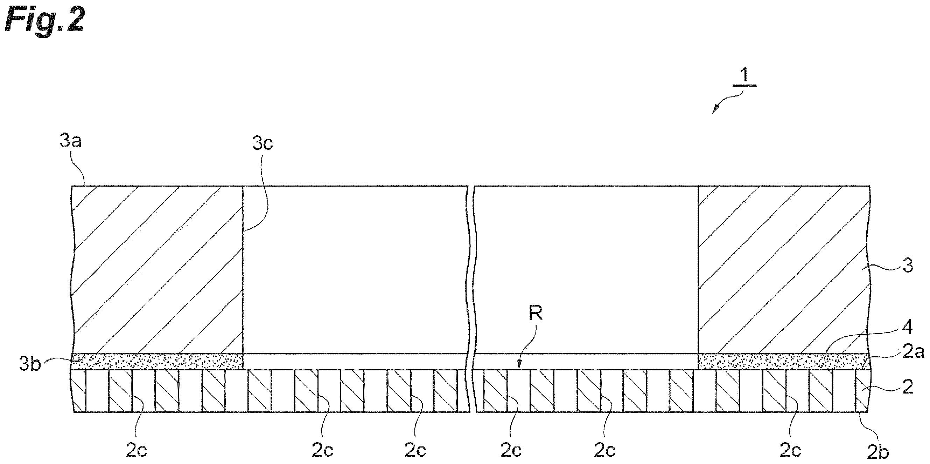

As illustrated in FIGS. 1 and 2, a sample support body 1 includes a substrate 2, a frame 3, and an adhesive layer 4. The substrate 2 has a first surface 2a, a second surface 2b, and a plurality of through-holes 2c. The second surface 2b is a surface on the side opposite to the first surface 2a. Each through-hole 2c opens on each of the first surface 2a and the second surface 2b. In the present embodiment, the plurality of through-holes 2c are formed uniformly (in a uniform distribution) over the entire substrate 2, and each through-hole 2c extends along a thickness direction (direction where the first surface 2a and the second surface 2b face each other) of the substrate 2.

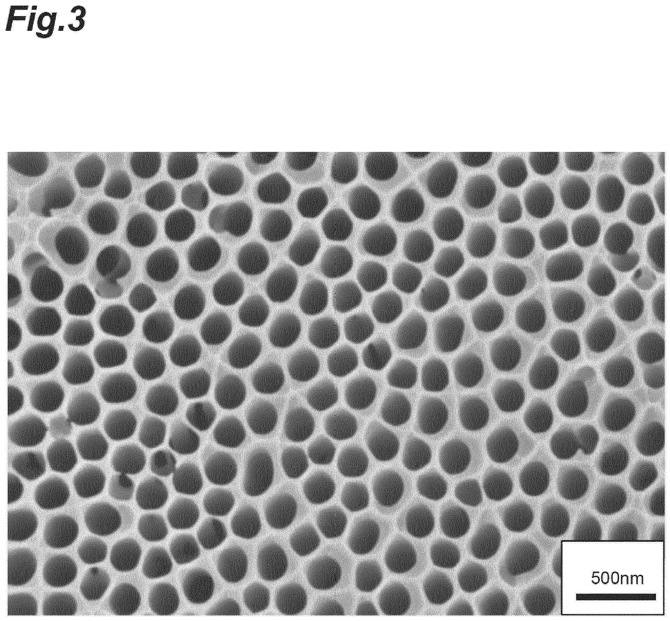

The substrate 2 is an electrically insulating member. In the present embodiment, the thickness of the substrate 2 is 1 to 50 µm, and the width of each through-hole 2c is about 1 to 700 nm. The shape of the substrate 2 when viewed from the thickness direction of the substrate 2 is, for example, a substantially circular shape having a diameter of about several mm to several cm. The shape of each through-hole 2c when viewed from the thickness direction of the substrate 2 is, for example, a substantially circular shape (refer to FIG. 3). It is noted that the width of the through-hole 2c means the diameter of the through-hole 2c when the shape of the through-hole 2c when viewed from the thickness direction of the substrate 2 is a circular shape, and the width of the through-hole 2c means the diameter (effective diameter) of the virtual maximum cylinder that fits in the through-hole 2c when the shape is a shape other than the circular shape.

The frame 3 has a third surface 3a, a fourth surface 3b, and an opening 3c. The fourth surface 3b is a surface on the side opposite to the third surface 3a and is a surface on the substrate 2 side. The opening 3c opens on each of the third surface 3a and the fourth surface 3b. The frame 3 is an electrically insulating member, and the thermal conductivity of the frame 3 is 1.0 W/m·K or less. In the present embodiment, the material of the frame 3 is polyethylene terephthalate (PET), polyethylene naphthalate (PEN) or polyimide (PI), and the thickness of the frame 3 is 10 to 500 µm (more preferably less than 100 µm). Further, in the present embodiment, the frame 3 has transparency to visible light, and the frame 3 has a flexibility. The shape of the frame 3 when viewed from the thickness direction of the substrate 2 is, for example, a rectangle having a side of about several cm. The shape of the opening 3c when viewed from the thickness direction of the substrate 2 is, for example, a circular shape having a diameter of about several mm to several cm. It is noted that the lower limit of the thermal conductivity of the frame 3 is, for example, 0.1 W/m·K.

The frame 3 is attached to the substrate 2. In the present embodiment, the region of the first surface 2a of the substrate 2 along an outer edge of the substrate 2 and the region of the fourth surface 3b of the frame 3 along an outer edge of the opening 3c are fixed to each other by the adhesive layer 4. The material of the adhesive layer 4 is, for example, an adhesive material (low melting point glass, vacuum adhesive, or the like) having little discharge gas. In the sample support body 1, the portion of the substrate 2 corresponding to the opening 3c of the frame 3 functions as an effective region R for moving the components of the sample from the second surface 2b side to the first surface 2a side via the plurality of through-holes 2c.

FIG. 3 is an enlarged image of the substrate 2 when viewed from the thickness direction of the substrate 2. In FIG. 3, the black portion is the through-hole 2c, and the white portion is a partition wall portion between the through-holes 2c. As illustrated in FIG. 3, the plurality of through-holes 2c having a substantially constant width are uniformly formed on the substrate 2. The aperture ratio (the ratio of all the through-holes 2c to the effective region R when viewed from the thickness direction of the substrate 2) of the through-holes 2c in the effective region R is practically 10 to 80%, and in particular, preferably 60 to 80%. The sizes of the plurality of through-holes 2c may be irregular to each other, or the plurality of through-holes 2c may be partially connected to each other.

The substrate 2 illustrated in FIG. 3 is an alumina porous film formed by anodizing aluminum (Al). Specifically, the substrate 2 can be obtained by performing anodizing treatment on the Al substrate and peeling the oxidized surface portion from the Al substrate. It is noted that the substrate 2 may be formed by anodizing a valve metal other than Al such as tantalum (Ta), niobium (Nb), titanium (Ti), hafnium (Hf), zirconium (Zr), zinc (Zn), tungsten (W), bismuth (Bi), or antimony (Sb) or may be formed by anodizing silicon (Si).

### [Ionization Method and Mass Spectrometry Method]

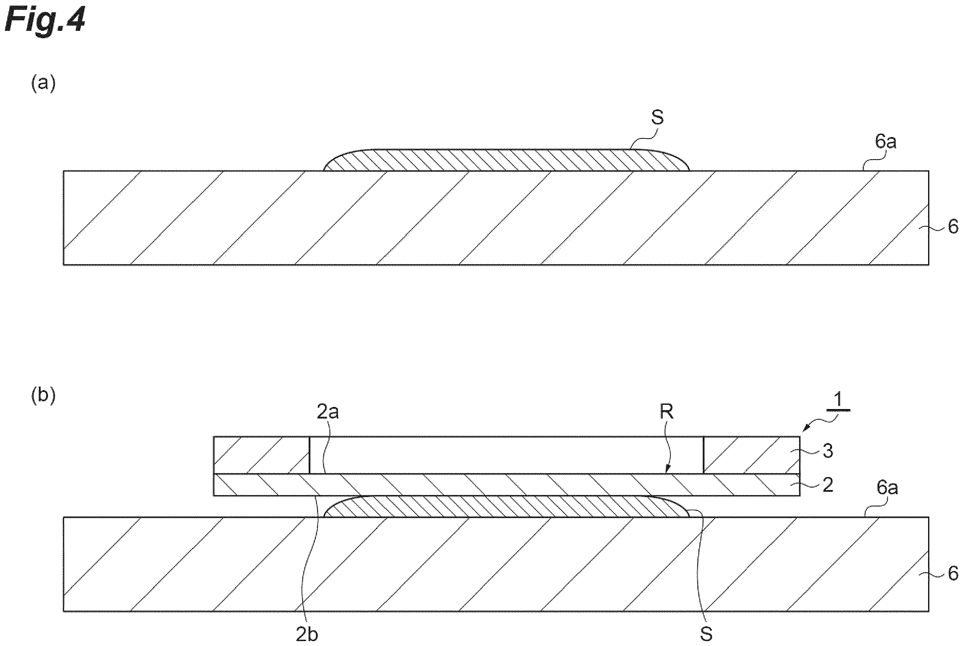

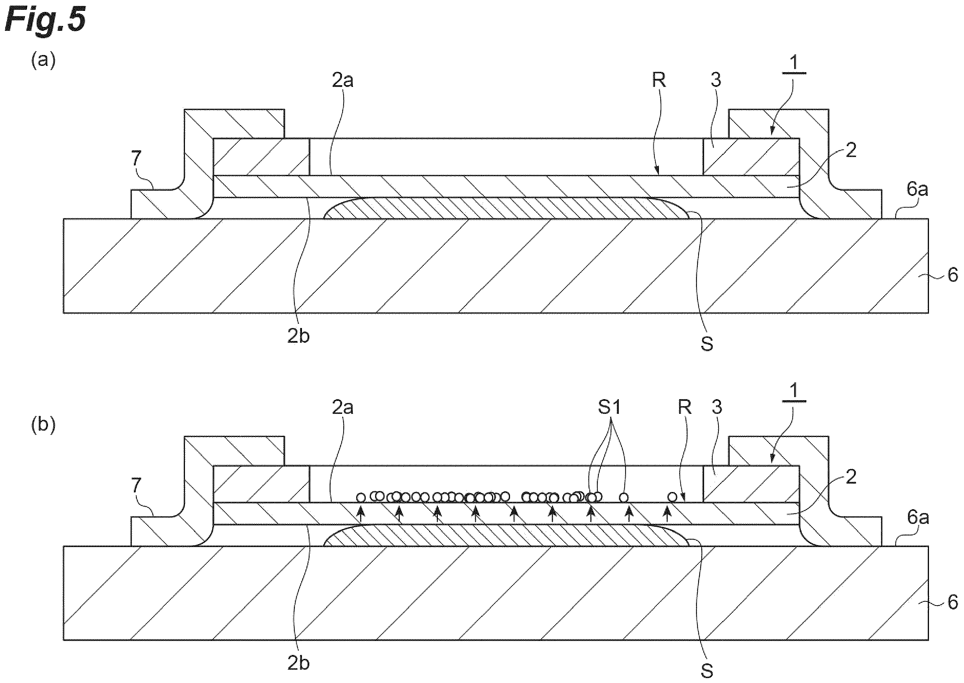

The ionization method and the mass spectrometry method using the sample support body 1 will be described. It is noted that, in FIGS. 4 and 5, in the sample support body 1, the through-hole 2c and the adhesive layer 4 are omitted in illustration. Further, the sample support body 1 illustrated in FIGS. 1 and 2 and the sample support body 1 illustrated in FIGS. 4 and 5 have different dimensional ratios and the like for the convenience of illustration.

First, the above-described sample support body 1 is prepared as the sample support body for ionizing the sample (first process). The sample support body 1 may be prepared by being manufactured by a practitioner of the ionization method and the mass spectrometry method or may be prepared by being transferred from a manufacturer, a seller, or the like of the sample support body 1.

Subsequently, as illustrated in (a) of FIG. 4, a sample S is mounted on a mount surface 6a of a slide glass (mount portion) 6 (second process). The sample S is a biological sample (water-containing sample) in a thin-film state such as a tissue section and is in a frozen state. Subsequently, as illustrated in (b) of FIG. 4, the sample support body 1 is mounted on the mount surface 6a so that the second surface 2b of the substrate 2 is in contact with the sample S (second process). At this time, the sample support body 1 is arranged so that the sample S is located in the effective region R when viewed from the thickness direction of the substrate 2. Subsequently, as illustrated in (a) of FIG. 5, the frame 3 is fixed to the slide glass 6 by using an electrically insulating tape 7. When the sample S is thawed in this state, as illustrated in (b) of FIG. 5, in the substrate 2, components S1 of the sample S move from the second surface 2b side to the first surface 2a side via the plurality of through-holes 2c (refer to FIG. 2) due to, for example, a capillary phenomenon, and the components S1 of the sample S stay on the first surface 2a side due to, for example, surface tension.

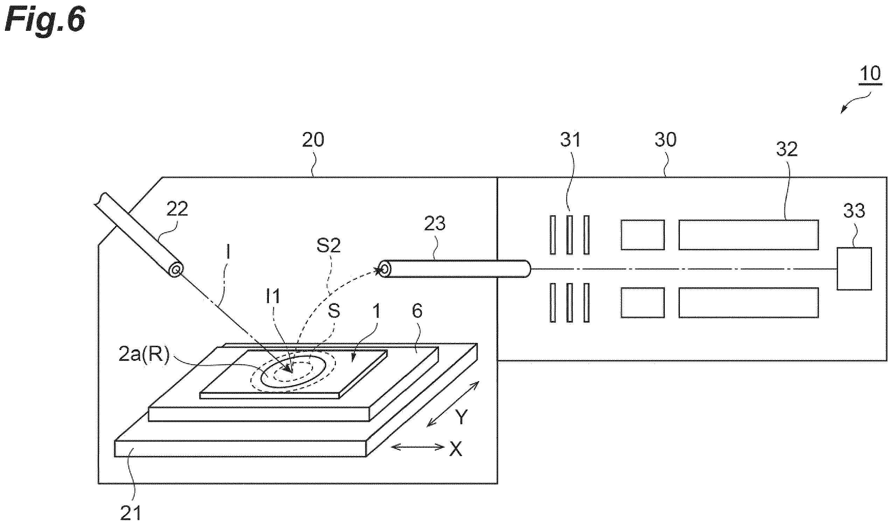

Subsequently, when the sample S is dried, as illustrated in FIG. 6, the slide glass 6, the sample S, and the sample support body 1 are mounted on a stage 21 in an ionization chamber 20 of a mass spectrometer 10. The inside of the ionization chamber 20 is under conditions of from an atmospheric pressure ambience to a medium vacuum ambience (ambience having a vacuum degree of 10⁻³ Torr or more). Subsequently, the region of the first surface 2a of the substrate 2 corresponding to the effective region R is irradiated with charged-droplets I to ionize the components S1 of the sample S that have moved to the first surface 2a side, and sample ions S2 which are ionized components are sucked (third process). In the present embodiment, for example, by moving the stage 21 in an X-axis direction and a Y-axis direction, an irradiation region I1 of the charged-droplets I is moved relative to the region of the first surface 2a of the substrate 2 corresponding to the effective region R (that is, the region is scanned with the charged-droplets I). The above first process, second process and third process correspond to the ionization method (in this embodiment, the desorption electrospray ionization method) using the sample support body 1.

In the ionization chamber 20, the charged-droplets I are sprayed from a nozzle 22, and the sample ions S2 are sucked from the suction port of an ion transport tube 23. The nozzle 22 has a double cylinder structure. A solvent is guided to the inner cylinder of the nozzle 22 in a state where a high voltage is applied. Accordingly, biased charges are applied to the solvent that has reached the tip of the nozzle 22. Nebrize gas is guided to the outer cylinder of the nozzle 22. Accordingly, the solvent is sprayed as microdroplets, and the solvent ions generated in the process of vaporizing the solvent are emitted as the charged-droplets I.

The sample ions S2 sucked from the suction port of the ion transport tube 23 are transported into a mass spectrometry chamber 30 by the ion transport tube 23. The inside of the mass spectrometry chamber 30 is under a high vacuum ambience (ambience having a vacuum degree of 10⁻⁴ Torr or less). In the mass spectrometry chamber 30, the sample ions S2 are converged by an ion optical system 31 and introduced into a quadrupole mass filter 32 to which a high frequency voltage is applied. When the sample ions S2 are introduced into the quadrupole mass filter 32 to which the high frequency voltage is applied, ions having a mass number determined by the frequency of the high frequency voltage are selectively passed, and the passed ions are detected by a detector 33 (fourth process). By scanning with the frequency of the high frequency voltage applied to the quadrupole mass filter 32, the mass number of the ions reaching the detector 33 is sequentially changed to obtain mass spectra in a predetermined mass range. In the present embodiment, the detector 33 detects ions so as to correspond to the position of the irradiation region I1 of the charged-droplets I to form an image from the two-dimensional distribution of the molecules constituting the sample S. The above first process, second process, third process and fourth process correspond to the mass spectrometry method using the sample support body 1.

### [Function and Effect]

In the ionization method using the sample support body 1, the components S1 of the sample S move from the second surface 2b side to the first surface 2a side via the plurality of through-holes 2c in the substrate 2 of the sample support body 1 and stay on the first surface 2a side. Then, since the substrate 2 and the frame 3 of the sample support body 1 are electrically insulating members, for example, even if the nozzle 22 that is a microdroplet irradiation portion to which a high voltage is applied is allowed to be close to the first surface 2a, the occurrence of electric discharge between the nozzle 22 and the sample support body 1 is suppressed. Therefore, according to the ionization method using the sample support body 1, the nozzle 22 is allowed to be close to the first surface 2a and the first surface 2a is irradiated with the charged-droplets I, so that it is possible to surely ionize the components S1 of the sample S that have moved to the first surface 2a side via the plurality of through-holes 2c.

Further, in the ionization method using the sample support body 1, the desorption electrospray ionization method is performed under the conditions of from an atmospheric pressure ambience to a medium vacuum ambience (ambience having a vacuum degree of 10⁻³ Torr or more). Accordingly, it is possible to easily replace the sample S and easily observe and analyze the sample S. In particular, under such conditions, the charged-droplets I sprayed from the nozzle 22 are likely to be in contact with atmospheric gas molecules and the like and to be diffused. For this reason, allowing the nozzle 22 to be closer to the first surface 2a as described above is extremely effective in surely ionizing the components S1 of the sample S.

Further, in the ionization method using the sample support body 1, the irradiation region I1 of the charged-droplets I is moved relative to the region of the first surface 2a of the substrate 2 corresponding to the effective region R. In the components S1 of the sample S staying on the first surface 2a side of the substrate 2, the position information (two-dimensional distribution information of the molecules constituting the sample S) of the sample S is maintained. Therefore, by moving the irradiation region I1 of the charged-droplets I relative to the region of the first surface 2a of the substrate 2 corresponding to the effective region R, the components S1 of the sample S can be ionized while the position information of the sample S is maintained. Accordingly, in the subsequent process of detecting the sample ions S2, it is possible to form an image from the two-dimensional distribution of the molecules constituting the sample S. Further, since the nozzle 22 can be allowed to be close to the first surface 2a as described above, it is possible to suppress the expansion of the irradiation region I1 of the charged-droplets I. Accordingly, in the subsequent process of detecting the sample ions S2, it is possible to form an image from the two-dimensional distribution of the molecules constituting the sample S with a high resolution.

Further, in the mass spectrometry method using the sample support body 1, as described above, the components S1 of the sample S are surely ionized by the irradiation with the charged-droplets I, so that it is possible to improve the signal intensity at the time of detecting the sample ions S2.

Herein, analysis results by each of the mass spectrometry method of Comparative Example and the mass spectrometry method of Example will be described. In the mass spectrometry method of Comparative Example, the biological sample was mounted on the mount surface of the slide glass, and the biological sample was irradiated with charged-droplets to ionize the components of the biological sample, so that the mass spectrum and the two-dimensional distribution image of the specific ions were obtained for the molecules (ions) constituting the biological sample. In the mass spectrometry method of Example, similarly to the above-described embodiment, the biological sample and the sample support body were mounted on the mount surface of the slide glass, and the first surface of the substrate of the sample support body was irradiated with the charged-droplets to ionize the components of the biological sample, so that the mass spectrum and the two-dimensional distribution image of the specific ions were obtained for the molecules (ions) constituting the biological sample.

In each of the mass spectrometry method of Comparative Example and the mass spectrometry method of Example, a frozen section (thickness of 40 µm) of a mouse brain was used as a biological sample. Further, in each of the mass spectrometry method of Comparative Example and the mass spectrometry method of Example, the components of the biological sample were ionized by irradiation with the charged-droplets under the same conditions. Further, in each of the mass spectrometry method of Comparative Example and the mass spectrometry method of Example, the mass spectra were obtained for the molecules (ions) constituting the biological sample under the same conditions. In the mass spectrometry method of Example, the following sample support body 1 was used.
Material of Substrate 2: Alumina
Thickness of Substrate 2: 10 µm
Width of Through Hole 2c: 190 nm
Aperture Ratio of Through Hole 2c: 43%
Material of Frame 3: Glass
Thickness of Frame 3: 130 to 170 µm

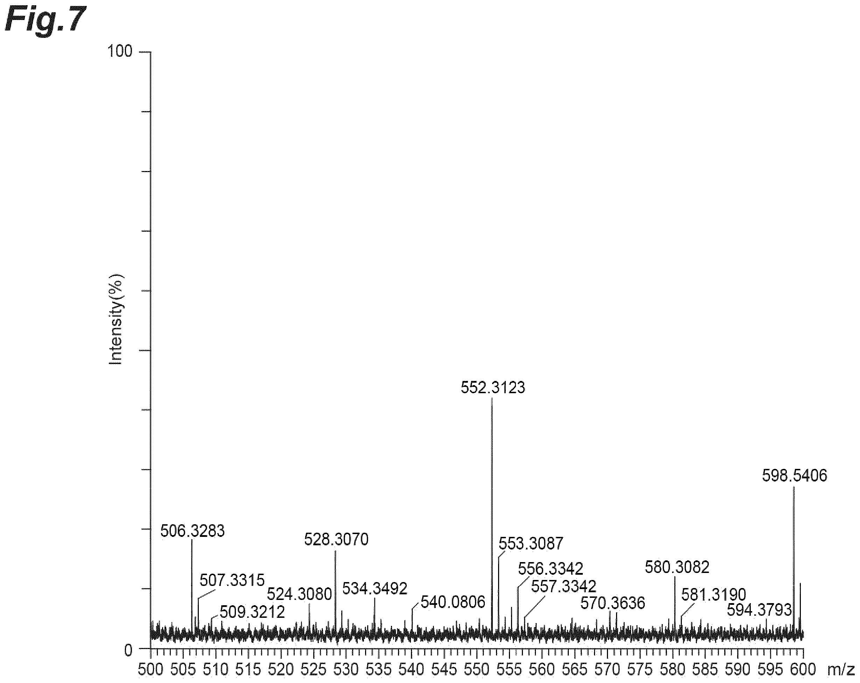

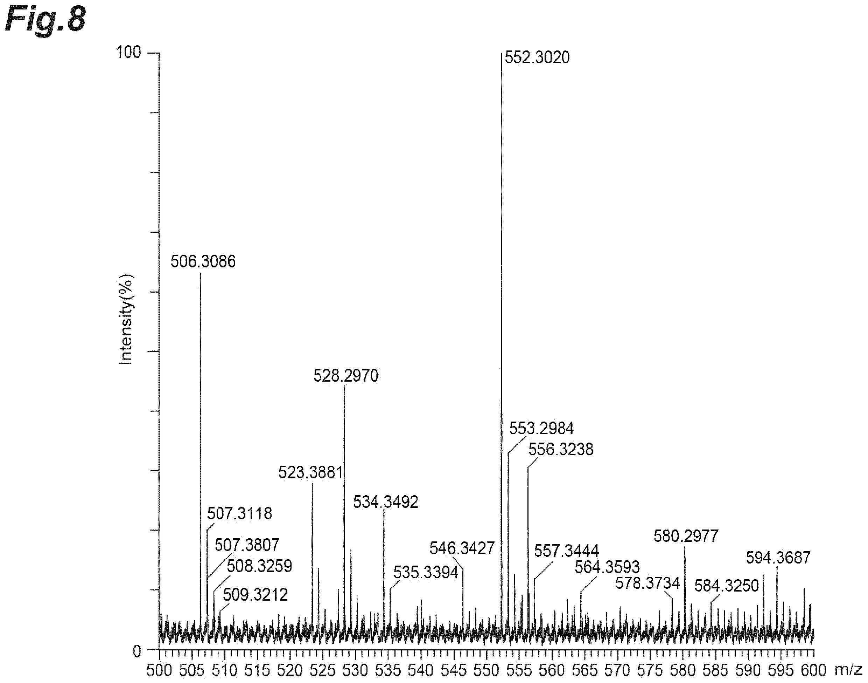

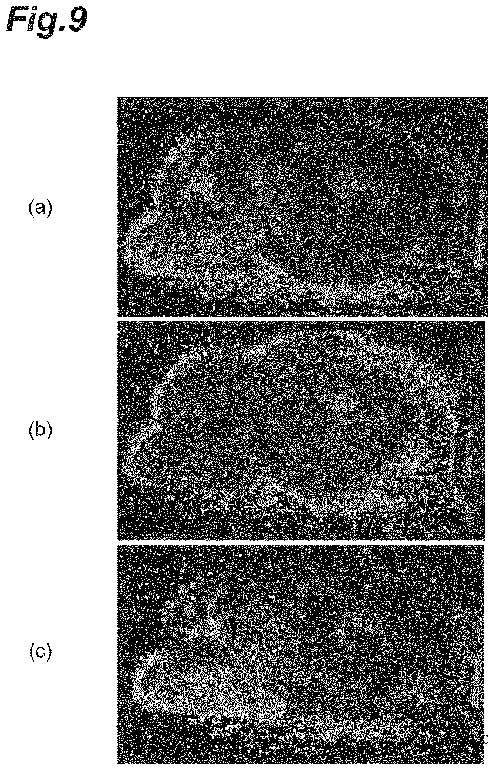

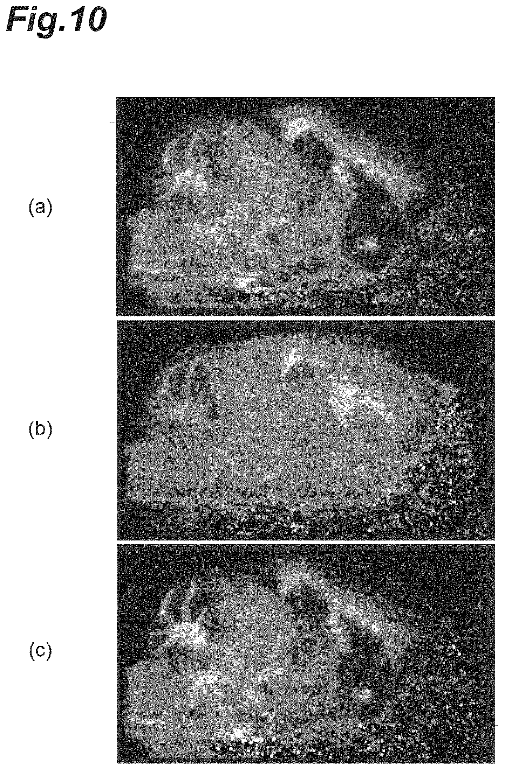

FIG. 7 is a view illustrating a mass spectrum obtained by the mass spectrometry method of Comparative Example, and FIG. 8 is a view illustrating a mass spectrum obtained by the mass spectrometry method of Example. Further, FIG. 9 is a view illustrating a two-dimensional distribution image of specific ions obtained by the mass spectrometry method of Comparative Example, and FIG. 10 is a view illustrating a two-dimensional distribution image of specific ions obtained by the mass spectrometry method of Example. In each of FIGS. 9 and 10, (a) is a two-dimensional distribution image for a mass-to-charge ratio (m/z) = 506.32, (b) is a two-dimensional distribution image for a mass-to-charge ratio (m/z) = 528.30 and (c) is a two-dimensional distribution image for a mass-to-charge ratio (m/z) = 534.34. As can be seen from the results, according to the mass spectrometry method of Example, in comparison with the mass spectrometry method of Comparative Example, a higher signal intensity could be obtained particularly at the mass-to-charge ratio (m/z) ≤ 600 (for example, for lysophospholipid), and the two-dimensional distribution of specific ions was clearly illustrated. In the MALDI, there was no detection, in only the DESI (Comparative Example), there was a detection with a low sensitivity, and in the DESI-DIUTHAME (Example), there was detection with unexpectedly high sensitivity for the first time.

### [Modified Example]

The present disclosure is not limited to the embodiments described above. For example, the material of the frame 3 may be a resin other than PET, PEN, or PI or may be ceramics or glass. Even in this case, it is possible to easily obtain the electrically insulating frame 3. It is noted that the material of the frame 3 is not particularly limited as long as the electrically insulating frame 3 can be implemented. Further, the frame 3 may be colored with, for example, a pigment. Accordingly, it is possible to classify the sample support body 1 according to the application.

Further, in the above-described embodiment, one effective region R is provided on the substrate 2, but a plurality of the effective regions R may be provided on the substrate 2. Further, in the above-described embodiment, the plurality of through-holes 2c are formed in the entire substrate 2, but the plurality of through-holes 2c may be formed in a portion of the substrate 2 corresponding to at least the effective region R. Further, in the above-described embodiment, the sample S is arranged so that one sample S corresponds to one effective region R, but the sample S may be arranged so that a plurality of the samples S correspond to one effective region R.

Further, an opening different from the opening 3c may be formed in the frame 3, and the sample support body 1 may be fixed to the slide glass 6 with the tape 7 by using the opening. Further, the sample support body 1 may be fixed to the slide glass 6 by means (for example, means using an adhesive, a fixture, or the like) other than the tape 7. When the material of the frame 3 is a resin, it is also possible to fix the sample support body 1 to the slide glass 6 by using static electricity.

Further, the sample S is not limited to a water-containing sample and may be a dry sample. When the sample S is a dry sample, a solution (for example, an acetonitrile mixture or the like) for lowering a viscosity of the sample S is added to the sample S. Accordingly, it is possible to allow the components S1 of the sample S to move to the first surface 2a side of the substrate 2 via the plurality of through-holes 2c, for example, by the capillary phenomenon.

Various materials and shapes can be applied to each configuration in the above-described embodiment without being limited to the above-described materials and shapes. In addition, each configuration in one embodiment or Modified Example described above can be arbitrarily applied to each configuration in another embodiment or Modified Example.

### Reference Signs List

1: sample support body, 2: substrate, 2a: first surface, 2b: second surface, 2c: through-hole, 3: frame, 6: slide glass (mount portion), 6a: mount surface, I: charged-droplet, I1: irradiation region, S: sample, S1: component, S2: sample ion (ionized component).

## Claims

1. An ionization method comprising:
a first process of preparing a sample support body including an electrically insulating substrate having a first surface, a second surface on a side opposite to the first surface, and a plurality of through-holes opening on each of the first surface and the second surface, and an electrically insulating frame attached to the substrate;
a second process of mounting a sample on a mount surface of a mount portion and mounting the sample support body on the mount surface so that the second surface is in contact with the sample; and
a third process of ionizing components of the sample that have moved to the first surface side via the plurality of through-holes by irradiating the first surface with charged-droplets and sucking the ionized components.

2. The ionization method according to claim 1, wherein the third process is performed under conditions of from an atmospheric pressure ambience to a medium vacuum ambience.

3. The ionization method according to claim 1 or 2, wherein in the third process, an irradiation region of the charged-droplets is moved relative to the first surface.

4. A mass spectrometry method comprising:
the first process, the second process, and the third process of the ionization method according to any one of claims 1 to 3; and
a fourth process of detecting the components ionized in the third process.
